# EUROPEAN PATENT APPLICATION

(11) **EP 4 835 829 A1**
(43) Date of publication of application: **04.11.2026**
(21) Application number: 24910761.6
(22) Date of filing: 12.12.2024
(51) Int. Cl.: G06T 17/20, G06T 15/00, G06T 3/4038

(54) **THREE-DIMENSIONAL SCANNING AND RECONSTRUCTION METHOD AND APPARATUS, DEVICE, AND STORAGE MEDIUM**

(30) Priority: 29.12.2023 CN 202311849131
(71) Applicant: Shining 3D Tech Co., Ltd., Hangzhou, Zhejiang 311258 (CN)
(72) Inventor: CHEN, Keming, Hangzhou, Zhejiang 311258 (CN); JIANG, Tengfei, Hangzhou, Zhejiang 311258 (CN); LIN, Zhongwei, Hangzhou, Zhejiang 311258 (CN); ZHAO, Bintao, Hangzhou, Zhejiang 311258 (CN); JIA, Yongjie, Hangzhou, Zhejiang 311258 (CN); LIU, Yu, Hangzhou, Zhejiang 311258 (CN)
(74) Representative: Metida
(86) International application number: PCT/CN2024/138905
(87) International publication number: WO 2025/139830

(57) **Abstract**

Embodiments of the present disclosure provide a three-dimensional scanning reconstruction method, an apparatus, a device, and a storage medium, relating to a technical field of three-dimensional scanners. The method acquires a current frame image of a surface of an object to be measured, performs a real-time processing on the current frame image to obtain current frame three-dimensional point data configured to represent discrete point data of a current surface shape contour of the object to be measured, and performs a real-time mesh reconstruction based on the current frame three-dimensional point data to obtain current three-dimensional mesh update data configured to represent continuous surface data of the surface shape contour of the object to be measured. By adopting this technical solution, a scanning result of the object to be measured by the handheld three-dimensional scanner can be made more accurate and more directly reflect a final scanning result.

## Description

This disclosure claims priority to Chinese Patent Application No. 202311849131.2, filed with the China National Intellectual Property Administration on December 29, 2023, titled "Three-Dimensional Scanning Reconstruction Method, Apparatus, Device, and Storage Medium", the entire contents of which are incorporated herein by reference.

### TECHNICAL FIELD

Embodiments of the present disclosure relate to a technical field of three-dimensional scanners, and in particular, to a three-dimensional scanning reconstruction method, an apparatus, a device, and a storage medium.

### BACKGROUND

Handheld three-dimensional scanners, as non-contact three-dimensional measurement tools, have been widely used in industrial, medical, educational, and other fields. When scanning with a handheld three-dimensional scanner, it is often necessary to display a scanned surface of an object to be measured in real time to assist a user in determining a scanned area and an unscanned area.

Currently, common handheld three-dimensional scanners on the market generally display three-dimensional points on the object's surface. However, representing the object to be measured using only three-dimensional points has its limitations.

Therefore, there is an urgent need for a three-dimensional scanning reconstruction method that can make a scanning result of the object to be measured by the handheld three-dimensional scanner more accurate and more directly reflect a final scanning result.

### SUMMARY

To solve the above technical problem or at least partially solve the above technical problem, embodiments of the present disclosure provide a three-dimensional scanning reconstruction method, an apparatus, a device, and a storage medium.

A first aspect of embodiments of the present disclosure provides a three-dimensional scanning reconstruction method, the method comprises:
Acquiring a current frame image of a surface of an object to be measured;

Performing a real-time processing on the current frame image, and obtaining current frame three-dimensional point data, the current frame three-dimensional point data being configured to represent discrete point data of a current surface shape contour of the object to be measured;

Performing a real-time mesh reconstruction based on the current frame three-dimensional point data, and obtaining current three-dimensional mesh update data; the current three-dimensional mesh update data being configured to represent continuous surface data of the surface shape contour of the object to be measured.

In an example, in response that the current frame image is a non-first frame image, after obtaining the current frame three-dimensional point data, the method further comprises:
Obtaining current three-dimensional point update data by splicing and fusing the current frame three-dimensional point data with current three-dimensional point data; wherein the current three-dimensional point data is three-dimensional point data obtained by splicing and fusing three-dimensional point data of one or more frames acquired prior to the current frame three-dimensional point data.

In an example, the non-first frame image is a second frame image, the current frame three-dimensional point data is three-dimensional point data of a second frame, the current three-dimensional point data is three-dimensional point data of a first frame, and the current three-dimensional point update data is obtained by real-time splicing and fusing the three-dimensional point data of the first frame with the three-dimensional point data of the second frame.

In an example, the non-first frame image is a third frame image, the current frame three-dimensional point data is three-dimensional point data of a third frame, the current three-dimensional point data comprise three-dimensional point data of a first frame and three-dimensional point data of a second frame, and the current three-dimensional point update data is obtained by real-time splicing and fusing the three-dimensional point data of the first frame, the three-dimensional point data of the second frame, and the three-dimensional point data of the third frame.

In an example, the current frame image is a non-first frame image, performing the real-time mesh reconstruction based on the current frame three-dimensional point data, and obtaining current three-dimensional mesh update data comprises:
Determining partial data corresponding to the current frame three-dimensional point data from the current three-dimensional point update data;
Performing the real-time mesh reconstruction on the partial data based on current three-dimensional mesh data, and obtaining the current three-dimensional mesh update data; wherein the current three-dimensional mesh data is three-dimensional mesh data generated based on the current three-dimensional point data.

In an example, after obtaining the current three-dimensional mesh update data, the method further comprises:
Rendering the current three-dimensional mesh update data and generating an image of displaying a three-dimensional mesh.

In an example, performing the real-time mesh reconstruction on the partial data based on current three-dimensional mesh data, and obtaining the current three-dimensional mesh update data comprises:
Constructing, in parallel, a topological relationship for a neighborhood of each three-dimensional point in the partial data, and obtaining the current three-dimensional mesh update data.

In an example, constructing, in parallel, the topological relationship for the neighborhood of each three-dimensional point in the partial data, and obtaining the current three-dimensional mesh update data comprises:
Dividing the partial data into a plurality of spatial blocks;
Constructing the topological relationship for the neighborhood of each three-dimensional point within each of the spatial blocks, and obtaining a plurality of sub-meshes;
Obtaining the current three-dimensional mesh update data based on the plurality of sub-meshes constructed for each of the spatial blocks.

In an example, constructing the topological relationship for the neighborhood of each three-dimensional point within each of the spatial blocks, and obtaining the plurality of sub-meshes comprises:
For each spatial block, determining an initial edge based on three-dimensional points within the spatial block as a current topological edge;
Traversing each three-dimensional point within the spatial block other than those forming the current topological edge, determining a triangle formed by each three-dimensional point and the current topological edge, and determining a triangle satisfying a preset condition as a face patch of the sub-mesh;
Updating two edges in the face patch other than the initial edge as current topological edges.

In an example, determining the initial edge based on three-dimensional points within the spatial block as the current topological edge comprises:
Determining an arbitrary three-dimensional point within the spatial block that does not belong to any face patch as an initial point;
Traversing each three-dimensional point within the spatial block other than the initial point, calculating a distance value between each three-dimensional point and the initial point, and determining the three-dimensional point with a smallest distance value as a first connected three-dimensional point;
Determining an edge formed by the initial point and the first connected three-dimensional point as the initial edge.

In an example, AB is used to represent the initial edge, C is used to represent each three-dimensional point traversed within the spatial block other than those on the edge AB, BC and AC are used to represent the current topological edges, then a triangle formed by A, B, and C needs to satisfy a preset condition, the preset condition comprises: ${d}_{c} = \left|AB\right| + \left|AC\right| + \left|BC\right| - min \left(\left|AB\right|, \left|AC\right|, \left|BC\right|\right) ,$ and/or, for a non-initial surface patch, a subsequently acquired face patch does not overlap with previously acquired surface patches.

In an example, obtaining the current three-dimensional mesh update data based on the plurality of sub-meshes constructed for each of the spatial blocks comprises:
Finding, in each spatial block, an edge that is not shared by a plurality of surface patches as a current topological edge;
Traversing each three-dimensional point within a neighboring spatial block of the spatial block, determining a triangle formed by each three-dimensional point and the current topological edge, and determining a triangle satisfying a preset condition as a face patch of the current three-dimensional mesh.

In an example, EF is used to represent the current topological edge, G is used to represent each three-dimensional point traversed within the neighboring spatial block of the spatial block, EG is used to represent an edge formed between a point G and one end of the current topological edge EF, and FG is used to represent an edge formed between the point G and another end of the current topological edge EF, then a triangle formed by E, F, and G needs to satisfy a preset condition, the preset condition comprises: ${d}_{c} = \left|EF\right| + \left|EG\right| + \left|FG\right| - min \left(\left|EF\right|, \left|EG\right|, \left|FG\right|\right) ,$ and/or, for a non-initial surface patch, a subsequently acquired face patch does not overlap with previously acquired surface patches.

In an example, each of the spatial blocks is composed of one voxel or a plurality of voxels in a voxel grid where the current three-dimensional point update data is located.

In an example, the spatial block is a spatial block corresponding to the current three-dimensional point update data; comprising a spatial block corresponding to the partial data in the current three-dimensional point update data and/or a spatial block corresponding to the current frame three-dimensional point data in the current three-dimensional point update data, such that newly added three-dimensional mesh data and existing three-dimensional mesh data form a continuous mesh.

A second aspect of the embodiments of the present application provides a three-dimensional scanning reconstruction apparatus, the apparatus comprises:
An acquisition module, being configured to acquire a current frame image of a surface of an object to be measured;
A processing module, being configured to perform a real-time processing on the current frame image and obtain current frame three-dimensional point data, wherein the current frame three-dimensional point data is configured to represent discrete point data of a current surface shape contour of the object to be measured;
A reconstruction module, being configured to perform a real-time mesh reconstruction based on the current frame three-dimensional point data, and obtain current three-dimensional mesh update data; wherein the current three-dimensional mesh update data is configured to represent continuous surface data of the surface shape contour of the object to be measured.

A third aspect of the embodiments of the present application provides an electronic device, a server comprises:
A processor and a storage device, wherein the storage device stores a computer program, and when the computer program is executed by the processor, the processor executes the method of the first aspect.

A fourth aspect of the embodiments of the present application provides a computer-readable storage medium, wherein the storage medium stores a computer program, wherein when the computer program is executed by a processor, the method of the first aspect.

Embodiments of the present disclosure provide a three-dimensional scanning reconstruction method, an apparatus, a device, and a storage medium. The method acquires a current frame image of a surface of an object to be measured, performs a real-time processing on the current frame image to obtain current frame three-dimensional point data configured to represent discrete point data of a current surface shape contour of the object to be measured, and performs a real-time mesh reconstruction based on the current frame three-dimensional point data to obtain current three-dimensional mesh update data configured to represent continuous surface data of the surface shape contour of the object to be measured. By adopting the technical solution, a scanning result of the object to be measured by a handheld three-dimensional scanner can be made more accurate and more directly reflect a final scanning result.

### BRIEF DESCRIPTION OF THE DRAWINGS

The drawings herein are incorporated into and form part of the specification, illustrate embodiments conforming to the present disclosure, and are intended to explain the principles of the present disclosure together with the specification.

To more clearly illustrate the embodiments of the present disclosure or the technical solutions in the prior art, the drawings used in the description of the embodiments or the prior art will be briefly described below. Obviously, the drawings in the following description are merely some embodiments of the present disclosure, and other drawings may be obtained by those of ordinary skill in the art without creative effort.
FIG. 1 is a flowchart illustrating a three-dimensional scanning reconstruction method according to a first embodiment of the present disclosure;
FIG. 2 is a flowchart illustrating another three-dimensional scanning reconstruction method according to a second embodiment of the present disclosure;
FIG. 3 is a structural diagram of a spatial block according to the second embodiment of the present disclosure;
FIG. 4 is a schematic diagram of an image of displaying a three-dimensional mesh according to the second embodiment of the present disclosure;
FIG. 5 is a structural diagram of a three-dimensional scanning reconstruction apparatus according to a third embodiment of the present disclosure;
FIG. 6 is a structural diagram of a three-dimensional scanning reconstruction apparatus according to a fourth embodiment of the present disclosure;
FIG. 7 is a structural diagram of an electronic device according to an embodiment of the present disclosure.

### DETAILED DESCRIPTION

In order to more clearly understand the above objectives, features, and advantages of the present disclosure, the solutions of the present disclosure will be further described below. It should be noted that the embodiments of the present disclosure and the features therein may be combined with each other without conflict.

Many specific details are set forth in the following description to facilitate a full understanding of the present disclosure. However, the present disclosure may also be implemented in other ways different from those described herein. Obviously, the embodiments in the specification are only a part of the embodiments of the present disclosure, not all of them.

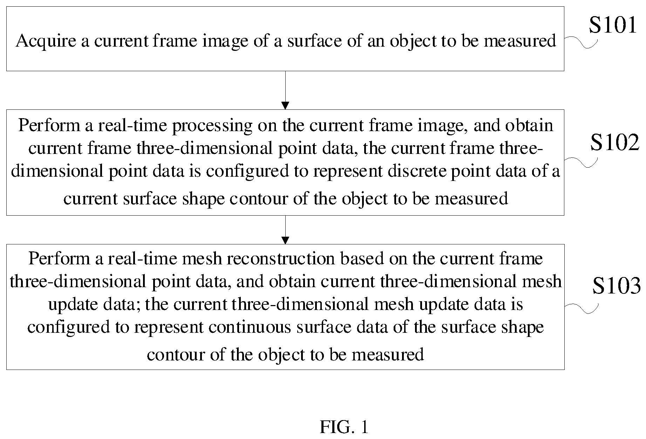

FIG. 1 is a flowchart illustrating a three-dimensional scanning reconstruction method according to a first embodiment of the present disclosure. The method may be executed by an electronic device. The electronic device may be exemplarily understood as a device such as a mobile phone, a tablet computer, a laptop computer, a desktop computer, a smart TV, etc. As shown in FIG. 1, the method provided in this embodiment includes following steps:
S101, a current frame image of a surface of an object to be measured is obtained.

In this embodiment, the object to be measured can be an object of various shapes. The current frame image includes a first frame image and a non-first frame image. Specifically, the surface of the object to be measured is scanned by a three-dimensional scanner to obtain the current frame image of the surface, and the three-dimensional scanner sends the current frame image to a graphics card. An execution subject in this embodiment is the graphics card.

S102, a real-time processing is performed on the current frame image to obtain current frame three-dimensional point data, where the current frame three-dimensional point data is configured to represent discrete point data of a current surface shape contour of the object to be measured.

In this embodiment, the current frame three-dimensional point data is configured to represent discrete point data of the current surface shape contour of the object to be measured. If the current frame image is the first frame image, the current frame three-dimensional point data is three-dimensional point data of a first frame. If the current frame image is a non-first frame image, the current frame three-dimensional point data is three-dimensional point data of a non-first frame. The graphics card performs the real-time processing on the current frame image to obtain the discrete point data of the current surface shape contour of the object to be measured. The discrete point data are collected point data that are not continuous.

S103, a real-time mesh reconstruction is performed based on the current frame three-dimensional point data to obtain current three-dimensional mesh update data; where the current three-dimensional mesh update data is configured to represent continuous surface data of the surface shape contour of the object to be measured.

In an example, the current three-dimensional mesh update data represents a result of building surfaces from the discrete point data of the current surface shape contour of the object to be measured, i.e., the current three-dimensional mesh update data represents continuous surface data of the surface shape contour of the object to be measured.

In this embodiment, each time the current frame three-dimensional point data is obtained, it is processed in real time. A specified processing method is a mesh reconstruction, thereby obtaining the current three-dimensional mesh update data.

The present disclosure provides a three-dimensional scanning reconstruction method. The method acquires the current frame image of the surface of the object to be measured, performs the real-time processing on the current frame image to obtain current frame three-dimensional point data configured to represent discrete point data of the current surface shape contour of the object to be measured, and performs the real-time mesh reconstruction based on the current frame three-dimensional point data to obtain current three-dimensional mesh update data configured to represent continuous surface data of the surface shape contour of the object to be measured. By adopting this technical solution, the scanning result of the object to be measured by the handheld three-dimensional scanner can be made more accurate and more directly reflect the final scanning result.

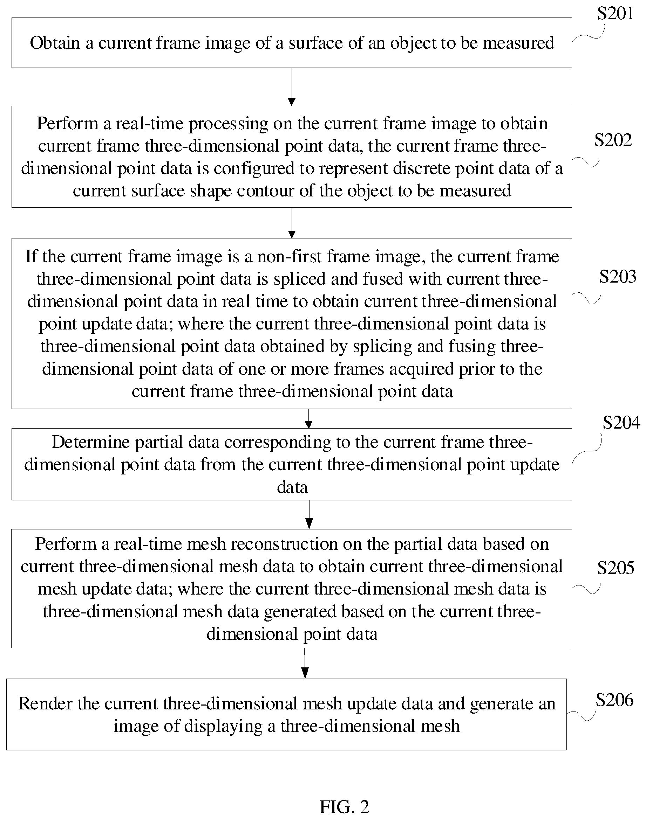

FIG. 2 shows a flowchart of another three-dimensional scanning reconstruction method according to a second embodiment of the present disclosure. This embodiment is optimized based on the foregoing embodiment and may be combined with various optional solutions in one or more of the foregoing embodiments.

As shown in FIG. 2, the three-dimensional scanning reconstruction method may includes following steps:
S201, a current frame image of a surface of an object to be measured is obtained.

Exemplarily, this step can refer to step S101 above and will not be repeated.

S202, a real-time processing is performed on the current frame image to obtain current frame three-dimensional point data, where the current frame three-dimensional point data is configured to represent discrete point data of a current surface shape contour of the object to be measured.

Exemplarily, this step can refer to step S102 above and will not be repeated.

S203, if the current frame image is a non-first frame image, the current frame three-dimensional point data is spliced and fused with current three-dimensional point data in real time to obtain current three-dimensional point update data; where the current three-dimensional point data is three-dimensional point data obtained by splicing and fusing three-dimensional point data of one or more frames acquired prior to the current frame three-dimensional point data.

In this embodiment, when the current frame image is the first frame image, the first frame image is directly processed in real time to obtain the three-dimensional point data of the first frame, and then the real-time mesh reconstruction is performed on the three-dimensional point data of the first frame to obtain the current three-dimensional mesh update data.

In this embodiment, when the current frame image is the non-first frame image and is a second frame image, the current frame three-dimensional point data is three-dimensional point data of a second frame, the current three-dimensional point data is three-dimensional point data of the first frame, and the current three-dimensional point update data is obtained by splicing and fusing the three-dimensional point data of the first frame with the three-dimensional point data of the second frame in real time.

In this embodiment, when the current frame image is the non-first frame image and is a third frame image, the current frame three-dimensional point data is three-dimensional point data of a third frame, the current three-dimensional point data include the three-dimensional point data of the first frame and the three-dimensional point data of the second frame, and the current three-dimensional point update data is obtained by splicing and fusing the three-dimensional point data of the first frame, with the three-dimensional point data of the second frame and three-dimensional point data of the third frame in real time. When the current frame image is the non-first frame image and is the Nth frame image, where N is greater than 3, a process of determining the current three-dimensional mesh update data is similar to that for the third frame image.

S204, partial data corresponding to the current frame three-dimensional point data is determined from the current three-dimensional point update data.

In this embodiment, if the current frame three-dimensional point data is three-dimensional point data of the third frame, since the current three-dimensional point update data includes the three-dimensional point data of the first frame, the three-dimensional point data of the second frame, and the three-dimensional point data of the third frame, it is necessary to determine the three-dimensional point data of the third frame as the partial data from the current three-dimensional point update data.

S205, a real-time mesh reconstruction is performed on the partial data based on current three-dimensional mesh data to obtain current three-dimensional mesh update data; where the current three-dimensional mesh data is three-dimensional mesh data generated based on the current three-dimensional point data.

In this embodiment, if the current frame three-dimensional point data is the three-dimensional point data of the third frame, the current three-dimensional mesh data is generated based on the three-dimensional point data of the first frame and the three-dimensional point data of the second frame. Then, based on the current three-dimensional mesh data, a real-time mesh reconstruction is performed on the three-dimensional point data of the third frame to obtain current three-dimensional mesh update data.

In an example, performing the real-time mesh reconstruction on the partial data to obtain the current three-dimensional mesh update data includes:
Based on the partial data, constructing in parallel a topological relationship for a neighborhood of each three-dimensional point in the partial data, to obtain the current three-dimensional mesh update data.

In this embodiment, the graphics card processes the partial data in parallel. Specifically, a topological relationship for the neighborhood of each three-dimensional point in the partial data is constructed in parallel, thereby obtaining the current three-dimensional mesh update data. An advantage of this configuration is an increase in the processing efficiency of the graphics card.

In an example, constructing in parallel the topological relationship for the neighborhood of each three-dimensional point based on the partial data to obtain the current three-dimensional mesh update data includes:
Dividing the partial data into a plurality of spatial blocks;
Constructing the topological relationship for the neighborhood of each three-dimensional point within each of the spatial blocks to obtain a plurality of sub-meshes;
Obtaining the current three-dimensional mesh update data based on the plurality of sub-meshes constructed for each of the spatial blocks.

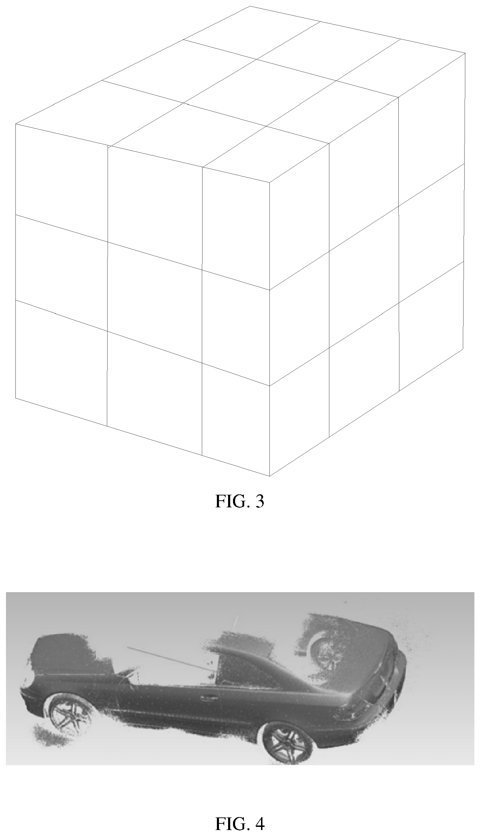

In an example, the spatial block is composed of one voxel or multiple voxels in a voxel grid where the current three-dimensional point update data is located. For better understanding, refer to FIG. 3, which shows a structural diagram of the spatial block. The neighborhood of the three-dimensional point refers to points within a preset range of the three-dimensional point. The topological relationship is a connection structure relationship. By constructing the topological relationship for the neighborhood of each three-dimensional point within each spatial block, the plurality of sub-meshes are obtained. The sub-mesh can be a triangular sub-mesh or a quadrilateral sub-mesh. Then, the current three-dimensional mesh update data is constructed based on these sub-meshes and historical sub-meshes.

In an example, constructing the topological relationship for the neighborhood of each three-dimensional point within each of the spatial blocks to obtain the plurality of sub-meshes, includes:
For each spatial block, determining an initial edge based on three-dimensional points within the spatial block as a current topological edge;

Traversing each three-dimensional point within the spatial block other than those three-dimensional points forming the current topological edge, determining a triangle formed by each said three-dimensional point and the current topological edge, and determining a triangle satisfying a preset condition as a face patch of the sub-mesh;

Updating two edges in the face patch other than the initial edge as the current topological edges.

In an example, the initial edge is a first determined edge, for example, an edge AB. Then, each three-dimensional point within the spatial block other than those on the edge AB is traversed, denoted as C for convenience, where BC and AC are considered as current topological edges. Then, it is determined whether a triangle formed by A, B, and C satisfies a preset condition. The preset condition includes at least one of the following:
1) ${d}_{c} = \left|AB\right| + \left|AC\right| + \left|BC\right| - min \left(\left|AB\right|, \left|AC\right|, \left|BC\right|\right) ;$
2) For a non-initial surface patch, a subsequently acquired face patch does not overlap with previously acquired surface patches.

In an example, determining the initial edge based on three-dimensional points within the spatial block as the current topological edge, includes:
Determining an arbitrary three-dimensional point within the spatial block that does not belong to any face patch as an initial point;
Traversing each three-dimensional point within the spatial block other than the initial point, calculating a distance value between each three-dimensional point that is traversed and the initial point, and determining a three-dimensional point with a smallest distance value as a first connected three-dimensional point;
determining an edge formed by the initial point and the first connected three-dimensional point as the initial edge.

In an example, determining an arbitrary three-dimensional point within the spatial block that does not belong to any face patch as an initial point A, traversing each three-dimensional point within the spatial block other than the initial point, determining a three-dimensional point with a smallest distance value as a first connected three-dimensional point B, and determining AB as an initial edge.

In an example, obtaining the current three-dimensional mesh update data based on the plurality of sub-meshes constructed for each of the spatial blocks includes:
Finding, in each spatial block, an edge that is not shared by multiple surface patches as a current topological edge;
Traversing each three-dimensional point within a neighboring spatial block of the spatial block, determining a triangle formed by each three-dimensional point and the current topological edge, and determining a triangle satisfying a preset condition as a face patch of the current three-dimensional mesh.

In an example, the spatial block includes the current spatial block and other spatial blocks. For example, EF is an edge not shared by multiple surface patches, so EF is a current topological edge. Then, each three-dimensional point G within a neighboring spatial block of the spatial block is traversed, and a triangle EFG formed is determined. If this triangle satisfies the preset condition, it is taken as a face patch of the current three-dimensional mesh. The preset condition includes at least one of the following:
1) ${d}_{c} = \left|EF\right| + \left|EG\right| + \left|FG\right| - min \left(\left|EF\right|, \left|EG\right|, \left|FG\right|\right) ;$
2) For a non-initial surface patch, a subsequently acquired face patch does not overlap with previously acquired surface patches.

In an example, determining the initial edge based on three-dimensional points within the spatial block as the current topological edge, includes:
Determining an arbitrary three-dimensional point within the spatial block that does not belong to any face patch as an initial point;
Traversing each three-dimensional point within the spatial block other than the initial point, calculating a distance value between each three-dimensional point that is traversed and the initial point, and determining a three-dimensional point with a smallest distance value as a first connected three-dimensional point;
determining an edge formed by the initial point and the first connected three-dimensional point as the initial edge.

In an example, determining an arbitrary three-dimensional point within the spatial block that does not belong to any face patch as an initial point A, traversing each three-dimensional point within the spatial block other than the initial point, determining a three-dimensional point with a smallest distance value as a first connected three-dimensional point B, and determining AB as an initial edge.

In an example, obtaining the current three-dimensional mesh update data based on the plurality of sub-meshes constructed for each of the spatial blocks includes:
Finding, in each spatial block, an edge that is not shared by multiple surface patches as a current topological edge;
Traversing each three-dimensional point within a neighboring spatial block of the spatial block, determining a triangle formed by each three-dimensional point and the current topological edge, and determining a triangle satisfying a preset condition as a face patch of the current three-dimensional mesh.

In an example, the spatial block includes the current spatial block and other spatial blocks. For example, EF is an edge not shared by multiple surface patches, so EF is a current topological edge. Then, each three-dimensional point G within a neighboring spatial block of the spatial block is traversed, and a triangle EFG formed is determined. If this triangle satisfies the preset condition, it is taken as a face patch of the current three-dimensional mesh. The preset condition includes at least one of the following:
1) ${d}_{c} = \left|EF\right| + \left|EG\right| + \left|FG\right| - min \left(\left|EF\right|, \left|EG\right|, \left|FG\right|\right) ;$ It should be noted that the spatial block refers to the spatial block corresponding to the current three-dimensional point update data, which may be the spatial block corresponding to the partial data in the current three-dimensional point update data, or the spatial block corresponding to the current frame three-dimensional point data in the current three-dimensional point update data, so that the newly added three-dimensional mesh data and the existing three-dimensional mesh data can form a continuous mesh.
2) For a non-initial surface patch, a subsequently acquired face patch does not overlap with previously acquired surface patches.

S206, the current three-dimensional mesh update data is rendered and an image of displaying a three-dimensional mesh is generated.

In an example, refer to FIG. 4, which shows a schematic diagram of an image of displaying a three-dimensional mesh. Specifically, it is obtained by rendering the continuous surface data of the surface shape contour of the object to be measured.

The present disclosure provides the three-dimensional scanning reconstruction method. The method determines partial data corresponding to the current frame three-dimensional point data from the current three-dimensional point update data, performs the real-time mesh reconstruction on the partial data based on current three-dimensional mesh data to obtain the current three-dimensional mesh update data, and constructs, in parallel, the topological relationship for the neighborhood of each three-dimensional point in the partial data to obtain the current three-dimensional mesh update data. By adopting this technical solution, the graphics card can construct the topological relationship for the neighborhood of each three-dimensional point in parallel to obtain the current three-dimensional mesh update data, thereby fully utilizing computing device resources and making the obtained current three-dimensional mesh update data more accurate.

It should be noted that parallel processing of the partial data includes multiple spatial blocks constructing sub-meshes in parallel, i.e., while one spatial block is constructing a sub-mesh, another spatial block may also be constructing a sub-mesh. Parallel processing of the partial data also includes multiple sub-meshes constructing a continuous mesh in parallel, i.e., while one spatial block and its neighboring spatial block are constructing surface patches, another spatial block and its neighboring spatial block may also be constructing surface patches. This allows rapid acquisition of the current three-dimensional mesh update data, achieving the effect of real-time three-dimensional mesh generation.

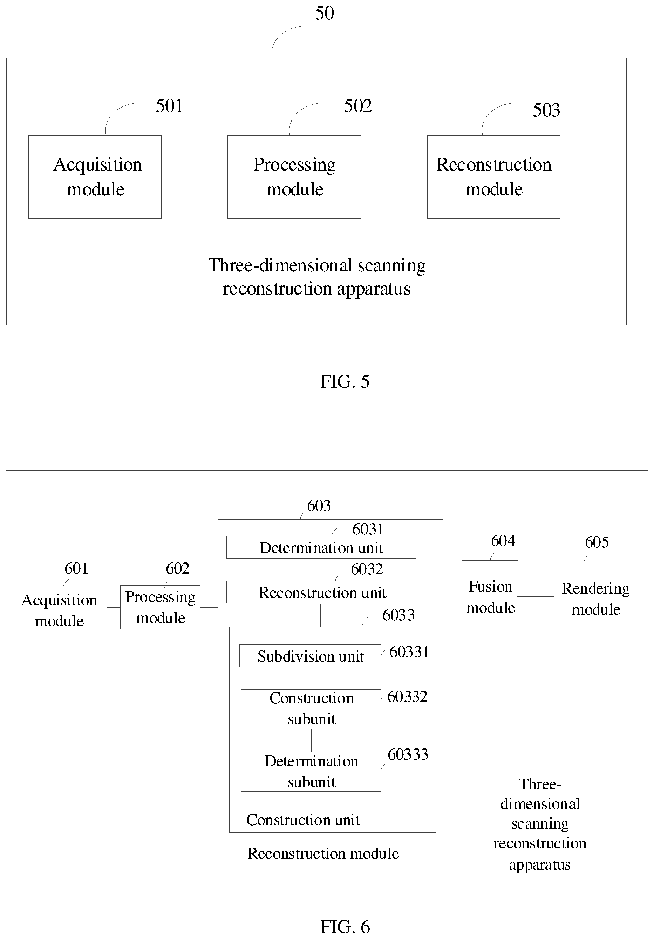

FIG. 5 is a structural diagram of a three-dimensional scanning reconstruction apparatus according to a third embodiment of the present disclosure. The three-dimensional scanning reconstruction apparatus may be understood as the aforementioned electronic device or part of the functional modules of the electronic device. As shown in FIG. 5, the three-dimensional scanning reconstruction apparatus 50 includes:
An acquisition module 501, is configured to acquire a current frame image of a surface of an object to be measured;
A processing module 502, is configured to perform a real-time processing on the current frame image to obtain current frame three-dimensional point data, where the current frame three-dimensional point data is configured to represent discrete point data of a current surface shape contour of the object to be measured;
A reconstruction module 503, is configured to perform a real-time mesh reconstruction based on the current frame three-dimensional point data to obtain current three-dimensional mesh update data; where the current three-dimensional mesh update data is configured to represent continuous surface data of the surface shape contour of the object to be measured.
The apparatus of this embodiment can execute the method of any of the foregoing embodiments. The execution manner and beneficial effects are similar and will not be repeated here.

FIG. 6 is a structural diagram of a three-dimensional scanning reconstruction apparatus according to a fourth embodiment of the present disclosure. The three-dimensional scanning reconstruction apparatus may be understood as the aforementioned electronic device or part of the functional modules of the electronic device. As shown in FIG. 6, the three-dimensional scanning reconstruction apparatus 60 includes:
An acquisition module 601, is configured to acquire a current frame image of a surface of an object to be measured;
A processing module 602, is configured to perform a real-time processing on the current frame image to obtain current frame three-dimensional point data, where the current frame three-dimensional point data is configured to represent discrete point data of a current surface shape contour of the object to be measured;
A reconstruction module 603, is configured to perform a real-time mesh reconstruction based on the current frame three-dimensional point data to obtain current three-dimensional mesh update data; where the current three-dimensional mesh update data is configured to represent continuous surface data of the surface shape contour of the object to be measured.

In an example, when the current frame image is a non-first frame image, after obtaining the current frame three-dimensional point data, the apparatus 60 further includes:
A fusion module 604, is configured to perform a real-time splicing and fusion of the current frame three-dimensional point data with current three-dimensional point data to obtain current three-dimensional point update data; where the current three-dimensional point data is three-dimensional point data obtained by splicing and fusing three-dimensional point data of one or more frames acquired prior to the current frame three-dimensional point data.

In an example, when the current frame image is a non-first frame image, the reconstruction module 603 includes:
A determination unit 6031, is configured to determine partial data corresponding to the current frame three-dimensional point data from the current three-dimensional point update data;
A reconstruction unit 6032, is configured to perform a real-time mesh reconstruction on the partial data based on current three-dimensional mesh data to obtain the current three-dimensional mesh update data; where the current three-dimensional mesh data is three-dimensional mesh data generated based on the current three-dimensional point data.

In an example, after obtaining the current three-dimensional mesh update data, the apparatus 60 further includes:
A rendering module 605, is configured to render the current three-dimensional mesh update data and generate an image of displaying the three-dimensional mesh.

In an example, the reconstruction module 603 includes:
A construction unit 6033, is configured to construct, in parallel, a topological relationship for a neighborhood of each three-dimensional point in the partial data to obtain the current three-dimensional mesh update data.

In an example, the construction unit 6033 includes:
A subdivision unit 60331, is configured to divide the partial data into a plurality of spatial blocks;
A construction subunit 60332, is configured to construct the topological relationship for the neighborhood of each three-dimensional point within each of the spatial blocks to obtain a plurality of sub-meshes;
A determination subunit 60333, is configured to obtain the current three-dimensional mesh update data based on the plurality of sub-meshes constructed for each of the spatial blocks.

In an example, the construction subunit 60332 is specifically configured to:
For each spatial block, determine an initial edge based on three-dimensional points within the spatial block as a current topological edge;
Traverse each three-dimensional point within the spatial block other than those associated with the current topological edge, determine a triangle formed by each three-dimensional point and the current topological edge, and determine a triangle satisfying a preset condition as a face patch of the sub-mesh;
Update two edges in the face patch other than the initial edge as current topological edges.

In an example, the construction subunit 60332 is specifically configured to:
Determine an arbitrary three-dimensional point within the spatial block that does not belong to any face patch as an initial point;
Traverse each three-dimensional point within the spatial block other than the initial point, calculate a distance value between each said three-dimensional point and the initial point, and determine the three-dimensional point with a smallest distance value as a first connected three-dimensional point;
Determine an edge formed by the initial point and the first connected three-dimensional point as the initial edge.

In an example, the determination subunit 60333 is specifically configured to:
Find, in each spatial block, an edge that is not shared by multiple surface patches as a current topological edge;
Traverse each three-dimensional point within a neighboring spatial block of the spatial block, determine a triangle formed by each three-dimensional point and the current topological edge, and determine a triangle satisfying a preset condition as a face patch of the current three-dimensional mesh.

The apparatus of this embodiment can execute the method of any of the foregoing embodiments. The execution manner and beneficial effects are similar and will not be repeated here.

An embodiment of the present disclosure further provides an electronic device. The electronic device includes: a storage device storing a computer program; and a processor configured to execute the computer program, where when the computer program is executed by the processor, the method according to any of the foregoing embodiments is implemented.

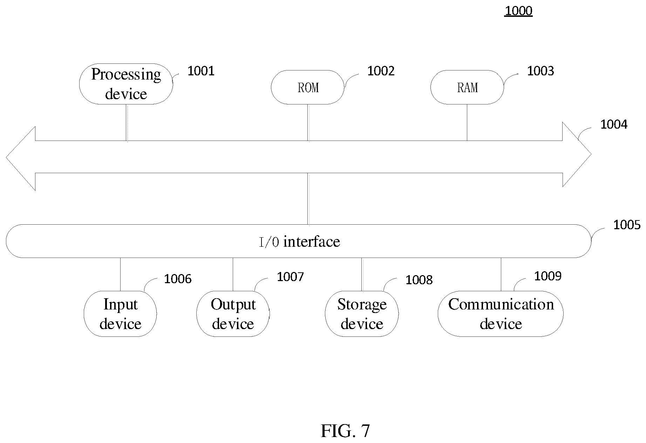

For example, FIG. 7 is a structural diagram of an electronic device according to an embodiment of the present disclosure. Referring specifically to FIG. 7, it shows a structural diagram of an electronic device 1000 suitable for implementing embodiments of the present disclosure. The electronic device 1000 of the present disclosure may include, but is not limited to, a mobile terminal such as a mobile phone, a laptop computer, a digital broadcast receiver, a PDA (Personal Digital Assistants), a PAD (tablet computer), a PMP (Portable Multimedia Player), a vehicle-mounted terminal (e.g., a vehicle-mounted navigation terminal), a head-mounted display device, etc., and a fixed terminal such as a digital TV, a desktop computer, etc. The electronic device shown in FIG. 7 is only an example and should not impose any limitations on the functionality and scope of use of the embodiments of the present disclosure.

As shown in FIG. 7, the electronic device 1000 may include a processing device (e.g., a central processing unit, a graphics processor, etc.) 1001, which may execute various appropriate actions and processes in accordance with a program stored in a read-only memory (ROM) 1002 or a program loaded from a storage device 1008 into a random access memory (RAM) 1003. In the RAM 1003, various programs and data required for the operation of the electronic device 1000 are also stored. The processing device 1001, the ROM 1002, and the RAM 1003 are connected to each other via a bus 1004. An input/output (I/O) interface 1005 is also connected to the bus 1004.

Typically, the following devices may be connected to the I/O interface 1005: an input device 1006 including, for example, a touch screen, a touchpad, a keyboard, a mouse, a camera, a microphone, an accelerometer, a gyroscope, etc.; an output device 1007 including, for example, a display, a speaker, a vibrator, etc.; a storage device 1008 including, for example, a magnetic tape, a hard disk, etc.; and a communication device 1009. The communication device 1009 may allow the electronic device 1000 to communicate wirelessly or wiredly with other devices to exchange data. Although FIG. 7 shows an electronic device 1000 with various devices, it should be understood that it is not required to implement or possess all the shown devices. Alternatively, more or fewer devices may be implemented or possessed.

In particular, according to embodiments of the present disclosure, the processes described above with reference to flowcharts may be implemented as computer software programs. For example, an embodiment of the present disclosure includes a computer program product comprising a computer program carried on a non-transitory computer-readable medium, the computer program containing program code configured to execute the method shown in the flowchart. In such an embodiment, the computer program may be downloaded and installed from a network via the communication device 1009, or installed from the storage device 1008, or installed from the ROM 1002. When the computer program is executed by the processing device 1001, the above-described functions defined in the method of the embodiments of the present disclosure are executed.

It should be noted that the computer-readable medium described above may be a computer-readable signal medium or a computer-readable storage medium or any combination thereof. A computer-readable storage medium may be, for example, but not limited to, an electronic, magnetic, optical, electromagnetic, infrared, or semiconductor system, apparatus, or device, or any combination thereof. More specific examples of the computer-readable storage medium may include, but are not limited to: an electrical connection having one or more wires, a portable computer disk, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof. In the present disclosure, a computer-readable storage medium may be any tangible medium that contains or stores a program which may be used by or in connection with an instruction execution system, apparatus, or device. In the present disclosure, a computer-readable signal medium may include a data signal propagated in baseband or as part of a carrier wave, embodying a computer-readable program code. Such a propagated data signal may take many forms, including but not limited to electromagnetic signals, optical signals, or any suitable combination thereof. A computer-readable signal medium may also be any computer-readable medium that is not a computer-readable storage medium and that may communicate, propagate, or transport a program for use by or in connection with an instruction execution system, apparatus, or device. Program code embodied on a computer-readable medium may be transmitted using any appropriate medium, including but not limited to wireless, wired, optical fiber cable, RF, etc., or any suitable combination thereof.

In some embodiments, clients and servers may communicate using any current or future developed network protocol, such as HTTP (HyperText Transfer Protocol), and may be interconnected with digital data communication of any form or medium (e.g., a communication network). Examples of communication networks include a local area network ("LAN"), a wide area network ("WAN"), the internet (e.g., the Internet), and peer-to-peer networks (e.g., ad hoc peer-to-peer networks), as well as any currently known or future developed network.

The above-described computer-readable medium may be contained in the aforementioned electronic device; or may exist separately and not be assembled into the electronic device.

The above-described computer-readable medium carries one or more programs which, when executed by the electronic device, cause the electronic device to: acquire a current frame image of a surface of an object to be measured; perform real-time processing on the current frame image to obtain current frame three-dimensional point data, wherein the current frame three-dimensional point data is configured to represent discrete point data of a current surface shape contour of the object to be measured; perform real-time mesh reconstruction based on the current frame three-dimensional point data to obtain current three-dimensional mesh update data; wherein the current three-dimensional mesh update data is configured to represent continuous surface data of the surface shape contour of the object to be measured.

Computer program code for executing the operations of the present disclosure may be written in one or more programming languages or combinations thereof, including but not limited to object-oriented programming languages such as Java, Smalltalk, C++, and conventional procedural programming languages such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet service provider).

The flowcharts and block diagrams in the figures illustrate the architecture, functionality, and operation of possible implementations of systems, methods, and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The units involved in the embodiments of the present disclosure may be implemented by software or hardware. The name of a unit does not constitute a limitation on the unit itself under certain circumstances.

The functions described herein may be performed, at least in part, by one or more hardware logic components. For example, without limitation, exemplary types of hardware logic components that may be used include: Field Programmable Gate Arrays (FPGAs), Application Specific Integrated Circuits (ASICs), Application Specific Standard Products (ASSPs), System-on-a-chip systems (SOCs), Complex Programmable Logic Devices (CPLDs), etc.

In the context of this disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, electronic, magnetic, optical, electromagnetic, infrared, or semiconductor systems, apparatus, or devices, or any suitable combination of the foregoing. More specific examples of the machine-readable storage medium would include an electrical connection having one or more wires, a portable computer disk, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing.

An embodiment of the present disclosure further provides a computer-readable storage medium. The storage medium stores a computer program. When the computer program is executed by a processor, the method according to any of the foregoing embodiments is implemented. The execution manner and beneficial effects are similar and will not be repeated here.

It should be noted that in this document, relational terms such as "first" and "second" are used only to distinguish one entity or operation from another entity or operation, and do not necessarily require or imply any actual such relationship or order between these entities or operations. Moreover, the terms "comprises", "comprising", or any other variation thereof, are intended to cover a non-exclusive inclusion, such that a process, method, article, or device that comprises a list of elements includes not only those elements but may include other elements not expressly listed or inherent to such process, method, article, or device. An element preceded by "comprises a..." does not, without more constraints, preclude the existence of additional identical elements in the process, method, article, or device that comprises the element.

The above description is only specific embodiments of the present disclosure, enabling those skilled in the art to understand or implement the present disclosure. Various modifications to these embodiments will be readily apparent to those skilled in the art, and the generic principles defined herein may be applied to other embodiments without departing from the spirit or scope of the present disclosure. Therefore, the present disclosure is not intended to be limited to the embodiments shown herein but is to be accorded the widest scope consistent with the principles and novel features disclosed herein.

### INDUSTRIAL APPLICABILITY

The three-dimensional scanning reconstruction method provided by the present disclosure acquires a current frame image of a surface of an object to be measured, performs a real-time processing on the current frame image to obtain current frame three-dimensional point data configured to represent discrete point data of a current surface shape contour of the object to be measured, and performs a real-time mesh reconstruction based on the current frame three-dimensional point data to obtain current three-dimensional mesh update data configured to represent continuous surface data of the surface shape contour of the object to be measured. By adopting this technical solution, a scanning result of the object to be measured by a handheld three-dimensional scanner can be made more accurate and more directly reflect the final scanning result, having strong industrial applicability.

## Claims

1. A three-dimensional scanning reconstruction method, **characterized in that** the method comprises:
acquiring a current frame image of a surface of an object to be measured;
performing a real-time processing on the current frame image, and obtaining current frame three-dimensional point data, the current frame three-dimensional point data being configured to represent discrete point data of a current surface shape contour of the object to be measured;
performing a real-time mesh reconstruction based on the current frame three-dimensional point data, and obtaining current three-dimensional mesh update data; the current three-dimensional mesh update data being configured to represent continuous surface data of the surface shape contour of the object to be measured.

2. The method according to claim 1, wherein in response that the current frame image is a non-first frame image, after obtaining the current frame three-dimensional point data, the method further comprises:
obtaining current three-dimensional point update data by splicing and fusing the current frame three-dimensional point data with current three-dimensional point data; wherein the current three-dimensional point data is three-dimensional point data obtained by splicing and fusing three-dimensional point data of one or more frames acquired prior to the current frame three-dimensional point data.

3. The method according to claim 2, wherein the non-first frame image is a second frame image, the current frame three-dimensional point data is three-dimensional point data of a second frame, the current three-dimensional point data is three-dimensional point data of a first frame, and the current three-dimensional point update data is obtained by real-time splicing and fusing the three-dimensional point data of the first frame with the three-dimensional point data of the second frame.

4. The method according to claim 2, wherein the non-first frame image is a third frame image, the current frame three-dimensional point data is three-dimensional point data of a third frame, the current three-dimensional point data comprise three-dimensional point data of a first frame and three-dimensional point data of a second frame, and the current three-dimensional point update data is obtained by real-time splicing and fusing the three-dimensional point data of the first frame, the three-dimensional point data of the second frame, and the three-dimensional point data of the third frame.

5. The method according to claim 2, wherein the current frame image is a non-first frame image, performing the real-time mesh reconstruction based on the current frame three-dimensional point data, and obtaining current three-dimensional mesh update data comprises:
determining partial data corresponding to the current frame three-dimensional point data from the current three-dimensional point update data;
performing the real-time mesh reconstruction on the partial data based on current three-dimensional mesh data, and obtaining the current three-dimensional mesh update data; wherein the current three-dimensional mesh data is three-dimensional mesh data generated based on the current three-dimensional point data.

6. The method according to claim 1 or 5, wherein after obtaining the current three-dimensional mesh update data, the method further comprises:
rendering the current three-dimensional mesh update data and generating an image of displaying a three-dimensional mesh.

7. The method according to claim 5, wherein performing the real-time mesh reconstruction on the partial data based on current three-dimensional mesh data, and obtaining the current three-dimensional mesh update data comprises:
constructing, in parallel, a topological relationship for a neighborhood of each three-dimensional point in the partial data, and obtaining the current three-dimensional mesh update data.

8. The method according to claim 7, wherein constructing, in parallel, the topological relationship for the neighborhood of each three-dimensional point in the partial data, and obtaining the current three-dimensional mesh update data comprises:
dividing the partial data into a plurality of spatial blocks;
constructing the topological relationship for the neighborhood of each three-dimensional point within each of the spatial blocks, and obtaining a plurality of sub-meshes;
obtaining the current three-dimensional mesh update data based on the plurality of sub-meshes constructed for each of the spatial blocks.

9. The method according to claim 8, wherein constructing the topological relationship for the neighborhood of each three-dimensional point within each of the spatial blocks, and obtaining the plurality of sub-meshes comprises:
for each spatial block, determining an initial edge based on three-dimensional points within the spatial block as a current topological edge;
traversing each three-dimensional point within the spatial block other than those forming the current topological edge, determining a triangle formed by each three-dimensional point and the current topological edge, and determining a triangle satisfying a preset condition as a face patch of the sub-mesh;
updating two edges in the face patch other than the initial edge as current topological edges.

10. The method according to claim 9, wherein determining the initial edge based on three-dimensional points within the spatial block as the current topological edge comprises:
determining an arbitrary three-dimensional point within the spatial block that does not belong to any face patch as an initial point;
traversing each three-dimensional point within the spatial block other than the initial point, calculating a distance value between each three-dimensional point and the initial point, and determining the three-dimensional point with a smallest distance value as a first connected three-dimensional point;
determining an edge formed by the initial point and the first connected three-dimensional point as the initial edge.

11. The method according to claim 9, wherein AB is used to represent the initial edge, C is used to represent each three-dimensional point traversed within the spatial block other than those on the edge AB, BC and AC are used to represent the current topological edges, then a triangle formed by A, B, and C needs to satisfy a preset condition, the preset condition comprises: ${d}_{c} = \left|AB\right| + \left|AC\right| + \left|BC\right| - min \left(\left|AB\right|, \left|AC\right|, \left|BC\right|\right) ,$ and/or, for a non-initial surface patch, a subsequently acquired face patch does not overlap with previously acquired surface patches.

12. The method according to claim 8, wherein obtaining the current three-dimensional mesh update data based on the plurality of sub-meshes constructed for each of the spatial blocks comprises:
finding, in each spatial block, an edge that is not shared by a plurality of surface patches as a current topological edge;
traversing each three-dimensional point within a neighboring spatial block of the spatial block, determining a triangle formed by each three-dimensional point and the current topological edge, and determining a triangle satisfying a preset condition as a face patch of the current three-dimensional mesh.

13. The method according to claim 12, wherein EF is used to represent the current topological edge, G is used to represent each three-dimensional point traversed within the neighboring spatial block of the spatial block, EG is used to represent an edge formed between a point G and one end of the current topological edge EF, and FG is used to represent an edge formed between the point G and another end of the current topological edge EF, then a triangle formed by E, F, and G needs to satisfy a preset condition, the preset condition comprises: ${d}_{c} = \left|EF\right| + \left|EG\right| + \left|FG\right| - min \left(\left|EF\right|, \left|EG\right|, \left|FG\right|\right) ,$ and/or, for a non-initial surface patch, a subsequently acquired face patch does not overlap with previously acquired surface patches.

14. The method according to claim 8, wherein each of the spatial blocks is composed of one voxel or a plurality of voxels in a voxel grid where the current three-dimensional point update data is located.

15. The method according to claim 8, wherein the spatial block is a spatial block corresponding to the current three-dimensional point update data; comprising a spatial block corresponding to the partial data in the current three-dimensional point update data and/or a spatial block corresponding to the current frame three-dimensional point data in the current three-dimensional point update data, such that newly added three-dimensional mesh data and existing three-dimensional mesh data form a continuous mesh.

16. A three-dimensional scanning reconstruction apparatus, **characterized in that** the three-dimensional scanning reconstruction apparatus comprises:
an acquisition module, being configured to acquire a current frame image of a surface of an object to be measured;
a processing module, being configured to perform a real-time processing on the current frame image and obtain current frame three-dimensional point data, wherein the current frame three-dimensional point data is configured to represent discrete point data of a current surface shape contour of the object to be measured;
a reconstruction module, being configured to perform a real-time mesh reconstruction based on the current frame three-dimensional point data, and obtain current three-dimensional mesh update data; wherein the current three-dimensional mesh update data is configured to represent continuous surface data of the surface shape contour of the object to be measured.

17. An electronic device, **characterized in that** the electronic device comprises:
a processor and a storage device, wherein the storage device stores a computer program, and when the computer program is executed by the processor, the processor executes the method according to any one of claims 1 to 15.

18. A computer-readable storage medium, **characterized in that** the storage medium stores a computer program, wherein when the computer program is executed by a processor, the method according to any one of claims 1 to 15 is implemented.
